# EUROPÄISCHE PATENTSCHRIFT

(11) **EP 4 258 159 B1**
(45) Veröffentlichungstag und Bekanntmachung des Hinweises auf die Patenterteilung: **04.06.2025**
(21) Anmeldenummer: 22166717.3
(22) Anmeldetag: 05.04.2022
(51) Int. Cl.: G06K 7/10, B65G 47/00, B65B 35/10

(54) **VERFAHREN ZUR IDENTIFIZIERUNG UND NACHVERFOLGUNG VON VEREINZELT GEFÖRDERTEN PRODUKTEN**
METHOD FOR IDENTIFYING AND TRACKING INDIVIDUALLY CONVEYED PRODUCTS
PROCÉDÉ D'IDENTIFICATION ET DE SUIVI DES PRODUITS TRANSPORTÉS INDIVIDUELLEMENT

(43) Veröffentlichungstag der Anmeldung: 11.10.2023
(73) Patentinhaber: Uhlmann Pac-Systeme GmbH & Co. KG, 88471 Laupheim (DE)
(72) Erfinder: Kostyrko, Dmytro, 88471 Laupheim (DE); Trautwein, Christian, 88471 Laupheim (DE); Damaschke, Norbert, 88471 Laupheim (DE); Schiele, Bruno, 88471 Laupheim (DE); Strobel, Andreas, 88471 Laupheim (DE); Kreutzer, Tom, 88471 Laupheim (DE); Kümmel, Volker, 88471 Laupheim (DE)
(74) Vertreter: Wächter, Jochen

(56) Entgegenhaltungen:
- WO-A1-2013/083544
- WO-A1-2014/031576
- WO-A1-2018/184760
- DE-A1- 3 241 489

## Beschreibung

Die vorliegende Erfindung betrifft ein Verfahren zur Identifizierung und Nachverfolgung von vereinzelt geförderten Produkten.

Viele Produkte, insbesondere in der pharmazeutischen Industrie, sind mit optischen Kennzeichnungen (QR-Codes, Datamatrix-Code etc.) versehen, um eine eindeutige Identifizierung und Nachverfolgung des einzelnen Produkts zu ermöglichen.

Wenn im Laufe der Förderung der Produkte diese Kennzeichnungen abgefragt werden sollen, müssen die Produkte bezüglich der jeweiligen Kamera so ausgerichtet sein, dass die Kennzeichnung der Kamera zugewandt ist oder, im Fall von Produkten ohne Vororientierung, das Produkt von verschiedenen Seiten mittels einer Kamera begutachtet wird.

DE 32 41 489 A1 schlägt ein Verfahren zum Markieren von transparenten Behältern mit umfangsseitigen Farbmarken vor, bei dem die Behälter in einer Lesestation mittels eines Reibrads einzeln gedreht werden.

In WO 2013/083544 A1 wird eine Lesevorrichtung vorgestellt, in der ein Behälter mit zu lesenden, umfangsseitigen Markierungen kontinuierlich gedreht wird, während dieser ebenfalls translatorisch entlang einer Förderstrecke bewegt wird, die sich in einem Sichtbereich eines optischen Sensors befindet.

WO 2014/031576 A1 offenbart ein Verfahren, das in ähnlicher Weise einen Träger eines Behälters samt dem Behälter entlang einer Förderstrecke translatorisch bewegt und kontinuierlich dreht, während der Träger mit dem Behälter einen Sichtbereich eines optischen Sensors durchfährt.

WO 2018/184760 A1 zeigt eine Vorrichtung, die einen Behälter in einem Sichtbereich eines optischen Sensors mittels eines Reibrads dreht, um eine an dem Behälterumfang angebrachte Markierung auszulesen.

Der vorliegenden Erfindung liegt die Aufgabe zugrunde, eine robuste Erkennung von auf ohne Vororientierung vorliegenden Produkten aufgebrachten Kennzeichnungen während des Transports der Produkte mit möglichst geringem apparativem Aufwand zu gewährleisten.

Diese Aufgabe wird durch die Merkmale des Anspruchs 1 gelöst.

Erfindungsgemäß umfasst das Verfahren zur Identifizierung und Nachverfolgung von vereinzelt geförderten Produkten, insbesondere von Medizinprodukten wie Spritzen, Ampullen, Vials oder Inhalatoren, wobei die vereinzelt geförderten Produkte zumindest bereichsweise rotationssymmetrisch, insbesondere zylindrisch, ausgebildet sind und eine Mantelfläche aufweisen, auf die jeweils eine Kennzeichnung, insbesondere ein Code, aufgebracht ist, folgende Schritte:
- Fördern der Produkte mittels einer Transportvorrichtung in einer Transportrichtung, wobei die Transportvorrichtung eine Vielzahl von aufeinanderfolgenden Zellen zur Aufnahme jeweils eines Produkts aufweist, wobei jedes Produkt in der zugehörigen Zelle drehbar aufgenommen ist,
- Drehen eines jeden Produkts während des Förderns mittels eines Reibungselements, das beim Fördern der Produkte mit jedem Produkt durch Reibung, bevorzugt Haftreibung, in Eingriff gelangt, und
- Auslesen der auf die Mantelfläche eines jeden Produkts aufgebrachten Kennzeichnung mittels eines stationären Kamerasystems mit mindestens einer Kamera während des Drehens des jeweiligen Produkts.

Das Kamerasystem weist mehrere Kameras auf, die in Transportrichtung aufeinanderfolgend und vorzugsweise in einer Linie angeordnet sind, zumindest aber eine erste und eine zweite Kamera.

Die Korrelation zwischen der Translationsgeschwindigkeit der Transportvorrichtung, dem Durchmesser des rotationssymmetrischen Bereichs des Produkts, dem Abstand der Zellen der Transportvorrichtung, der Breite des aktiven Sichtfelds der Kameras im Bereich der Produkte und dem Abstand der Kameras wird zueinander derart eingestellt, dass sich ein vom aktiven Sichtfeld der zweiten Kamera während der Drehung des Produkts erfasster zweiter Umfangsabschnitt des Produkts von einem vom aktiven Sichtfeld der ersten Kamera während der Drehung des Produkts erfassten ersten Umfangsabschnitt des Produkts unterscheidet.

Mit diesem Verfahren wird eine robuste Kennzeichnungserkennung von ohne Vororientierung geförderten Produkten während des Förderns gewährleistet. Allgemein im Rahmen der Erfindung werden Produkte ohne Vororientierung in der Transportvorrichtung aufgenommen, sodass die Ausrichtung der Kennzeichnung in der Zelle der Transportvorrichtung zufällig ist. Erst durch die Drehung der Produkte werden alle Abschnitte der Mantelfläche des Produkts vor dem Kamerasystem präsentiert und mindestens eine 360°-Drehung jedes Produkts vor dem Kamerasystem ist nötig, um jede Kennzeichnung sicher mit dem Kamerasystem zu erfassen.

Aufgrund der mehreren Kameras kann ein höherer Durchsatz der Produkte und eine höhere Transportgeschwindigkeit verwirklicht werden als mit einer einzigen Kamera, weil jede einzelne Kamera nur einen Teilumfang der Mantelfläche des Produkts auf die Kennzeichnung hin überprüfen muss. In einer bevorzugten Ausgestaltung kann das Kamerasystem auch drei, vier oder noch mehr Kameras aufweisen. Die Drehung der Produkte erfolgt vorzugsweise kontinuierlich im Bereich des gesamten Kamerasystems, d.h. entlang aller vorhandenen Kameras.

Die Wirkung des Reibungselements auf das Produkt entspricht einem mechanischen Bremsen. Aufgrund der drehbaren Lagerung des Produkts vollzieht dieses eine Drehung und rollt sich am Reibungselement ab.

In einer bevorzugten Ausführungsform ist das Reibungselement stationär im Sinne von unbewegt angeordnet. Hierdurch wird der strukturelle Aufbau besonders einfach gestaltet. Jedes Produkt rollt sich an dem stationären Reibungselement während der Förderung ab und bietet somit dem Kamerasystem während des Drehens jeweils einen bestimmten Umfangsabschnitt der Mantelfläche zur Begutachtung an. Das Reibungselement kann auch bewegt sein und läuft dann vorzugsweise mit konstanter Geschwindigkeit in Gegenrichtung zur Transportrichtung der Produkte.

In einer bevorzugten Ausgestaltung ist das Reibungselement eine Leiste. Ebenfalls ist die Ausgestaltung als umlaufender Riemen, drehbare Rolle oder drehbare Scheibe denkbar.

In besonders bevorzugter Ausgestaltung weist das Reibungselement ein Elastomer-Material auf, zumindest an der den Produkten zugewandten Seite des Reibungselements. Das Elastomer wird durch die vorbeilaufenden Produkte deformiert und die Produkte werden mittels Haftreibung besonders zuverlässig in Rotationsbewegung versetzt.

Es ist bevorzugt, dass das Angreifen des Reibungselements für das Drehen des Produkts an jedem Produkt im Bereich der Mantelfläche des Produkts erfolgt. Auf diese Weise wird eine konstante und sichere Drehung des Produkts gewährleistet.

Für eine sichere und gleichmäßige Drehung eines jeden Produkts ohne Schlupf ist es bevorzugt, wenn der Reibungskoeffizient zwischen dem Reibungselement und dem Material des Produkts bevorzugt mindestens 0,2, mehr bevorzugt mindestens 0,3, besonders bevorzugt mindestens 0,4 beträgt. Der Reibwert wird hierbei gemäß DIN ISO 8295 aus dem Jahr 1995 ermittelt.

Die Aufnahme jeder Zelle weist bevorzugt eine Formnut auf, mittels derer das Produkt in Position gehalten wird.

Jedes Produkt ist in seiner Aufnahme bevorzugt gegen seine Schwerkraft abgestützt und das Drehen des Produkts erfolgt um eine Rotationsachse des Produkts. Die Rotationsachse des Produkts verläuft in der Regel senkrecht zur Transportrichtung. Zur Abstützung des Produkts in der Aufnahme gegen seine Schwerkraft kann beispielsweise ein Produktflansch dienen, der auf einer oder mehreren Schultern der Aufnahme während der gesamten Drehung des Produkts um 360° abgestützt ist. Ebenso ist es denkbar, dass ein Bodenabschnitt des Produkts auf einem Stützboden der Zelle abgestützt ist.

Es ist jeweils bevorzugt, dass das Produkt in der Aufnahme an Rollen gelagert ist, deren Drehachse beispielsweise parallel zur Rotationsachse des Produkts ist. In besonders bevorzugter Ausgestaltung liegt die Mantelfläche des Produkts an den Rollen an. Hierdurch wird die Reibung zwischen Produkt und Zelle minimiert. Alternativ oder zusätzlich ist es denkbar, weitere Maßnahmen vorzusehen, die ein leichtes Gleiten beim Drehen des Produkts in der Zelle bewirken und den Reibungskoeffizienten zwischen Produkt und Aufnahme reduzieren. Beispielsweise kann die Schulter bzw. der Stützboden der Zelle zumindest an der dem Produkt zugewandten Seite ein hartes, glattes Material aufweisen.

In bevorzugter Ausgestaltung erfolgt das Fördern mit gleichmäßiger Translationsgeschwindigkeit und das Drehen erfolgt mit gleichmäßiger Drehgeschwindigkeit. Auf diese Weise wird eine sichere Erfassung der Kennzeichnung durch das Kamerasystem gefördert und die Auswertung der Kameraaufnahmen wird erleichtert.

Die Translationsgeschwindigkeit der Produkte kann prinzipiell so klein wie 1 mm pro Sekunde sein, beträgt üblicherweise aber bevorzugt mindestens 10 mm pro Sekunde, mehr bevorzugt mindestens 60 mm pro Sekunde, besonders bevorzugt mindestens 100 mm pro Sekunde.

Der Durchmesser im rotationssymmetrischen Bereich der Produkte liegt vorzugsweise zwischen 5 und 40 mm, mehr bevorzugt zwischen 6 und 30 mm.

Die Drehgeschwindigkeit der Produkte beträgt üblicherweise von 0,08 bis 8 Umdrehungen pro Sekunde, bevorzugt von 0,1 bis 6 Umdrehungen pro Sekunde, mehr bevorzugt von 0,5 bis 6 Umdrehungen pro Sekunde, besonders bevorzugt von 1 bis 6 Umdrehungen pro Sekunde.

Es ist dabei bevorzugt, wenn sich die aktiven Sichtfelder der mehreren Kameras im Bereich der Produkte räumlich nicht überlagern. Dies trägt dazu bei, Doppelerfassungen einer Kennzeichnung durch mehrere Kameras auszuschließen.

Das "aktive Sichtfeld" einer Kamera kann entweder bauartbedingt für diese Kamera bereits dem tatsächlichen Sichtfeld der Kamera entsprechen. Alternativ kann das tatsächliche Sichtfeld der Kamera mittels geeigneter Softwareeinstellungen auf das gewünschte aktive Sichtfeld eingeschränkt werden, sodass nur die Inhalte dieses Bereichs aufgenommen bzw. ausgewertet werden.

Das aktive Sichtfeld jeder Kamera kann beispielsweise rechteckig sein. Die Breite des "aktiven Sichtfelds" jeder Kamera im Bereich der Produkte ist üblicherweise nicht größer als der jeweils gleiche Abstand zwischen zwei Zellen der Transportvorrichtung, bevorzugt zwischen 10 und 60 % kleiner, mehr bevorzugt zwischen 20 und 40 % kleiner. Hierdurch wird sichergestellt, dass zu jedem Zeitpunkt maximal eine Kennzeichnung eines Produkts im aktiven Sichtfeld einer Kamera identifizierbar ist, aber keine weitere Kennzeichnung eines zweiten Produkts. Alternativ ist es auch möglich, dass mittels einer Kamera gleichzeitig zwei Kennzeichnungen von aufeinanderfolgenden Produkten ausgelesen werden.

Die Höhe des aktiven Sichtfelds jeder Kamera ist aus Sicherheitsgründen in der Regel etwas größer zu wählen als die Höhe der Kennzeichnung, beispielsweise zwischen 30 % und 150 % größer.

Die Erkennung einer Kennzeichnung auf der Mantelfläche der Produkte durch eine Kamera wird üblicherweise bei einer Anordnung der Kennzeichnung in einem Drehwinkelbereich des Produkts von zwischen +/- 30°, manchmal auch erst in einem Bereich von zwischen +/- 20° oder von zwischen +/- 15° relativ zu einer zentralen Nulllinie möglich sein. Die zentrale Nulllinie entspricht dabei der Linie auf dem Produkt, auf welche die Kamera jeweils zu einem bestimmten Zeitpunkt senkrecht blickt.

Prinzipiell ist es im Rahmen der Erfindung möglich, das aktive Sichtfeld jeder Kamera durchgängig aktiv zu belassen und somit ständig Bilder in diesem Sichtfeld aufzunehmen. Vorteilhaft ist es allerdings, wenn jede Kamera nur zeitweise aktiviert wird. Auf diese Weise entfällt die Bildaufnahme zu irrelevanten Zeitpunkten.

In diesen Fällen ist ein Zeitintervall der Bildaufnahme einer Kamera üblicherweise nicht länger als die Dauer, in der sich die Transportvorrichtung um den Abstand zwischen zwei Zellen vorwärtsbewegt, vorzugsweise um 1 bis 30 % kürzer, mehr bevorzugt um 2 bis 25 % kürzer.

Die Aktivierungszeit jeder Kamera stimmt dabei vorzugsweise im Wesentlichen mit dem Zeitraum überein, in dem sich ein Produkt im aktiven Sichtfeld der Kamera befindet. Die Aktivierungszeit jeder Kamera wird vorzugsweise extern über eine Steuerung, beispielsweise über eine speicherprogrammierbare Steuerung des Gesamtsystems, vorgegeben, die den jeweiligen Ort jedes Produkts kennt.

Bei Verwendung mehrerer Kameras ist es grundsätzlich bevorzugt, dass alle stromabwärtigen Kameras für den Zeitraum des Durchlaufs eines bestimmten Produkts deaktiviert werden, sobald für dieses Produkt eine Kennzeichnung von einer der stromaufwärtigen Kameras erkannt wurde. Wenn von einer bestimmten Kamera die Kennzeichnung erfasst wurde, wird außerdem auch diese Kamera vorzugsweise deaktiviert, bis ein neues Produkt in deren aktives Sichtfeld gelangt oder das Sichtfeld wieder für das nächste Produkt aktiviert wird. Unter "deaktiviert" wird hierbei verstanden, dass entweder die Bildaufnahme der Kamera abgeschaltet wird oder dass die aufgenommenen Bilddaten nicht ausgewertet werden.

Bei der Einstellung der Korrelation zwischen der Translationsgeschwindigkeit der Transportvorrichtung, dem Durchmesser des rotationssymmetrischen Bereichs des Produkts, dem Abstand der Zellen der Transportvorrichtung, der Breite des aktiven Sichtfelds der Kameras im Bereich der Produkte und dem Abstand der Kameras zueinander muss auch die Aktivierungszeit jeder Kamera entsprechend mit den übrigen Parametern abgestimmt sein, wenn die Kameras nicht durchgängig Bilder aufnehmen.

Dabei ist es bevorzugt, wenn sich der erste und der zweite Umfangsabschnitt mindestens um eine Erstreckung der Kennzeichnung in Umfangsrichtung des rotationssymmetrischen Bereichs überlagern. Wenn genau zwei Kameras vorliegen, ist eine entsprechende Überlagerung an beiden Rändern der Umfangsabschnitte sinnvoll.

Wenn zusätzlich eine dritte Kamera vorliegt, soll sich der vom aktiven Sichtfeld der dritten Kamera während der Drehung des Produkts erfasste dritte Umfangsabschnitt des Produkts vom ersten und zweiten Umfangsabschnitt des Produkts unterscheiden. Wenn eine vierte Kamera vorliegt, soll sich der vom aktiven Sichtfeld der vierten Kamera während der Drehung des Produkts erfasste vierte Umfangsabschnitt des Produkts vom ersten, zweiten und dritten Umfangsabschnitt des Produkts unterscheiden. Für gegebenenfalls vorhandene weitere Kameras gilt entsprechendes. Es ist jeweils bevorzugt, wenn in diesen Fällen sich jeweils einer der Umfangsabschnitte, der von einer der Kameras abgedeckt wird, sich mindestens um die Abrollstrecke der Kennzeichnung in Umfangsrichtung des rotationssymmetrischen Bereichs mit zwei anderen Umfangsabschnitten überlagert. Insgesamt decken die mehreren Kameras somit in Summe den gesamten Umfang der Mantelfläche des Produkts ab, wobei in den Überschneidungsbereichen jeweils Überlappungen vorliegen. Auf diese Weise kann bei Gewährleistung eines sicheren Betriebs ein maximaler Durchsatz erzielt werden.

Vorzugsweise liegt eine Auswertefrequenz der mindestens einen Kamera im Bereich von 20 bis 60 Bildern pro Sekunde, bevorzugt im Bereich von 30 bis 50 Bildern pro Sekunde.

Allgemein im Rahmen der Erfindung ist die Kennzeichnung vorzugsweise ein 2D-Code, insbesondere ein QR-Code oder ein Datamatrix-Code. Es sind aber auch andere handelsübliche Kennzeichnungen denkbar, die optisch erkannt werden können.

Die Kennzeichnung ist üblicherweise entlang der Mantelfläche des Produkts angeordnet und zeigt daher eine Krümmung in Umfangsrichtung der Mantelfläche.

Die Kameras des Kamerasystems sind vorzugsweise digitale Bildaufnahmegeräte bzw. Codeleser.

Üblicherweise ist der vorgegebene Abstand zwischen aufeinanderfolgenden Zellen der Transportvorrichtung im Bereich von 20 mm bis 100 mm, mehr bevorzugt im Bereich von 20 mm bis 65 mm.

Der Abstand zwischen Kamera und Produkt beträgt in der Regel zwischen 50 mm und 120 mm, bevorzugt zwischen 60 mm und 80 mm.

Der Abstand zweier aufeinanderfolgender Kameras zueinander beträgt in der Regel zwischen 50 mm und 150 mm, bevorzugt zwischen 70 mm und 100 mm.

Die Auswertung und/oder Dekodierung der aufgenommenen Bilder und/oder Codes kann entweder in einer integrierten Auswerteeinheit im Kamerasystem selbst erfolgen oder in einer externen Auswerteeinheit. Diese kann beispielsweise Teil der Maschinensteuerung sein oder Daten an diese liefern.

Die Zuordnung von Produkt und Kennzeichnung erfolgt üblicherweise auf einem übergeordneten System, zum Beispiel einer speicherprogrammierbaren Steuerung.

Insbesondere kann der Dateninhalt des Codes nach erfolgter Dekodierung in einem Schieberegister dem Produkt zugeordnet werden und/oder an eine Steuerung übermittelt werden und/oder an eine Datenbank übermittelt werden.

Im Folgenden werden spezielle Ausführungsformen der Erfindung unter Bezugnahme auf die Zeichnungen beschrieben.
- Fig. 1: ist eine Perspektivansicht einer Vorrichtung zur Durchführung des erfindungsgemäßen Verfahrens;
- Fig. 2: ist eine Draufsicht auf die Vorrichtung aus Fig. 1;
- Fig. 3a: ist eine Querschnittsansicht durch eine Zelle der Transportvorrichtung mit aufgenommenem Produkt;
- Fig. 3b: entspricht Fig. 3a, enthält aber zusätzliche geometrische Angaben; und
- Fig. 4: zeigt eine mögliche Bildaufnahme einer Kamera im Rahmen des erfindungsgemäßen Verfahrens.

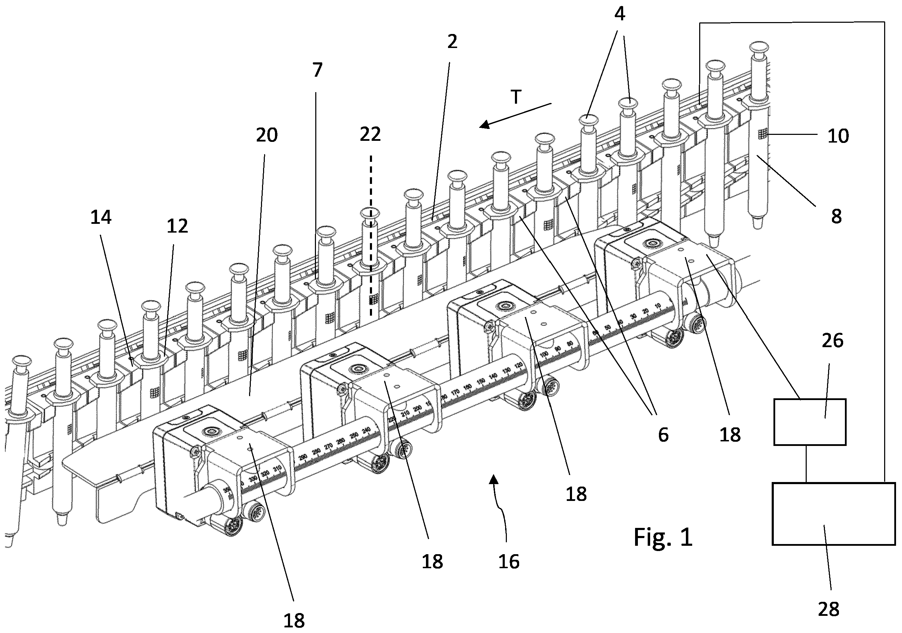

In Fig. 1 ist ein mögliches System zur Durchführung des erfindungsgemäßen Verfahrens dargestellt.

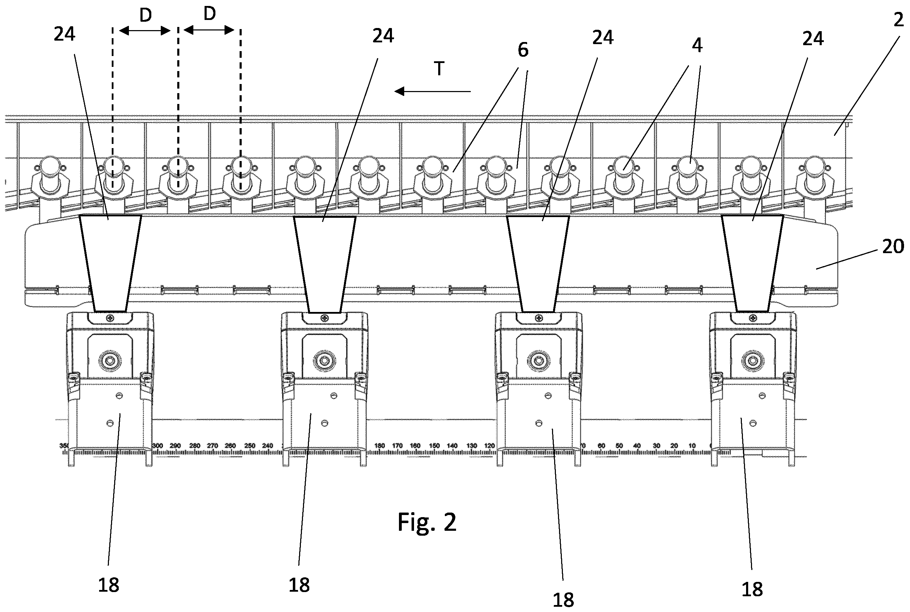

In einer Transportvorrichtung 2 werden Produkte 4, insbesondere Medizinprodukte wie Spritzen, Ampullen, Vials oder Inhalatoren, vereinzelt in einer Transportrichtung T kontinuierlich mit gleichbleibender Translationsgeschwindigkeit gefördert. Die Transportvorrichtung 2 weist einzelne Zellen 6 auf, in denen jeweils ein Produkt 4 in einer Aufnahme 7 aufgenommen ist. Die Zellen 6 sind jeweils identisch ausgebildet. Die Zellen 6 haben einen identischen Abstand D zueinander (siehe Fig. 2). Die Produkte 4 weisen jeweils bereichsweise eine Mantelfläche 8 auf, auf die allgemein jeweils eine Kennzeichnung 10 aufgebracht ist, beispielsweise als Etikett aufgeklebt oder direkt aufgedruckt ist.

Die Produkte 4 sind in den Zellen 6 anfangs in willkürlicher Ausrichtung drehbar aufgenommen. Jedes Produkt 4 wird dabei in der Regel eine andere Orientierung aufweisen. Im vorliegenden Fall sind die Produkte 4 als Spritzen ausgebildet, die einen Produktflansch 12 aufweisen, der auf einer Schulter 14 der jeweiligen Zellen 6 aufliegt, wo das Produkt 4 gegen seine Schwerkraft abgestützt ist. Die Produkte 4 hängen in diesem Fall vertikal in den jeweiligen Aufnahmen 7.

Die Produkte 4 werden in Transportrichtung T an einem Kamerasystem 16 vorbeigeführt, das im dargestellten Beispielsfall aus vier Kameras 18 besteht. Die einzelnen Kameras 18 sind in Transportrichtung T zueinander verschiebbar angeordnet, um für unterschiedliche Produkte 4 bzw. Produktformate eine optimale Einstellung zu gewährleisten. Während des Betriebs verbleiben sie aber stationär in ihrer voreingestellten Position.

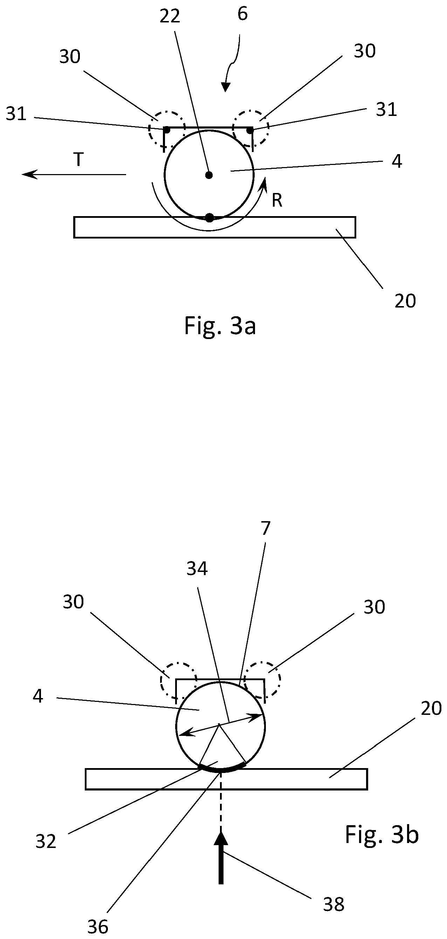

Während der Translationsbewegung der Produkte 4 werden die Produkte 4 in Kontakt mit einem Reibungselement 20 gebracht. Das Reibungselement 20 ist hier als stationäre Leiste ausgebildet, die auf der den Produkten 4 zugewandten Seite ein Elastomer-Material aufweist, das mit jedem Produkt 4 durch Reibung, hier Haftreibung, in Eingriff gelangt. Das Reibungselement 20 kann verstellbar sein, um an verschiedene Produktformate angepasst zu werden. Das Reibungselement 20 kommt direkt mit der Mantelfläche 8 der Produkte 4 in Kontakt und bewirkt eine gleichmäßige Drehung der Produkte 4 um eine Rotationsachse 22 eines jeden Produkts 4, die senkrecht zur Transportrichtung T ist. Die Drehrichtung ist in Fig. 3a mit Pfeil R skizziert.

Wie aus Fig. 2 hervorgeht, besitzt jede Kamera 18 ein aktives Sichtfeld 24, in dem sie die Kennzeichnung 10 des Produkts 4 aufnehmen kann. Die aktiven Sichtfelder 24 der einzelnen Kameras 18 überlappen sich vorzugsweise nicht. Ein Beispiel eines aktiven Sichtfelds 24 einer Kamera 18 im Bereich der Produkte 4 ist in Fig. 5 mittels des inneren Rechtecks als Ausschnitt eines größeren Bildbereichs bzw. maximalen Sichtfelds der Kamera 18 dargestellt.

Wie aus Fig. 1 hervorgeht, umfasst das System zudem eine Auswerteeinheit 26 für die von den Kameras 18 aufgenommenen Bilder sowie eine Steuerung 28, an welche die Daten von der Auswerteeinheit 26 übermittelt werden. Die Steuerung 28 kann gleichzeitig für den Betrieb der Transportvorrichtung 2 zuständig sein oder zumindest Informationen über den Betrieb der Transportvorrichtung 2 erhalten. Die Steuerung 28 kann außerdem ein Aktivierungsintervall einer jeden Kamera 18 triggern.

Während die einzelnen Produkte 4 am Reibungselement 20 ablaufen und in Drehung versetzt werden, wird die auf die Mantelfläche 8 eines jeden Produkts 4 aufgebrachte Kennzeichnung 10 mittels der Kameras 18 des Kamerasystems 16 ausgelesen. Wie aus Fig. 3a und 3b hervorgeht, ist jedes Produkt 4 in seiner Aufnahme 7 der entsprechenden Zelle 6 dabei vorzugsweise an Rollen 30 gelagert, deren Drehachsen 31 parallel zur Rotationsachse 22 des Produkts 4 verlaufen.

Jede Kamera 18 erkennt die Kennzeichnung 10 lediglich innerhalb eines bestimmten Drehwinkelbereichs beidseits um eine vertikale Nulllinie 36 herum, auf die die Blickrichtung 38 der Kamera 18 senkrecht trifft (Fig. 3b). In Fig. 3b ist dieser Winkelbereich mit Bezugszeichen 32 gekennzeichnet. Dieser Winkelbereich 32 ist abhängig vom Durchmesser 34 des Produkts 4 und beträgt in der Regel insgesamt 60° oder weniger. Die Frequenz der Bildaufnahme durch jede Kamera 18 muss so hoch sein, dass mindestens eine Aufnahme des vollständigen Kennzeichens 10 in diesem Winkelbereich erfolgt.

Die Anordnung der einzelnen Kameras 18 wird dabei so vorgenommen, dass die Korrelation zwischen der Translationsgeschwindigkeit der Transportvorrichtung 2, dem Durchmesser 34 des rotationssymmetrischen Bereichs des Produkts 4, dem Abstand D der Zellen 6 der Transportvorrichtung 2, der Breite B des aktiven Sichtfelds 24 der Kameras 18 im Bereich der Produkte 4 und dem Abstand der Kameras 18 zueinander derart ist, dass sich ein vom aktiven Sichtfeld 24 einer jeden Kamera während der Drehung des Produkts 4 erfasster Umfangsabschnitt des Produkts 4 von einem vom aktiven Sichtfeld 24 der anderen Kameras 18 während der Drehung des Produkts 4 erfassten Umfangsabschnitt des Produkts 4 unterscheidet. Die aktiven Sichtfelder 24 der Kameras 18 überlappen sich dabei jeweils vorzugsweise um die Erstreckung der Kennzeichnung 10 in Umfangsrichtung der Mantelfläche 8. Somit decken die Kameras 18 zusammen den gesamten Umfang der Mantelfläche 8 des Produkts 4 ab, unabhängig von der ursprünglichen Orientierung des Produkts 4. Die Überlappung der aktiven Sichtfelder 24 dient zur Sicherstellung, dass die komplette Kennzeichnung 10 in wenigstens einem aktiven Sichtfeld 24 einer Kamera 18 ausgelesen werden kann.

Aus Effizienzgründen ist es bevorzugt, wenn die Breite B des aktiven Sichtfelds 24 einer jeden Kamera 18 im Bereich der Produkte 4 möglichst groß ist. Gleichzeitig soll sichergestellt sein, dass im aktiven Sichtfeld 24 einer Kamera 18 lediglich ein Kennzeichen 10 gleichzeitig ausgelesen werden kann.

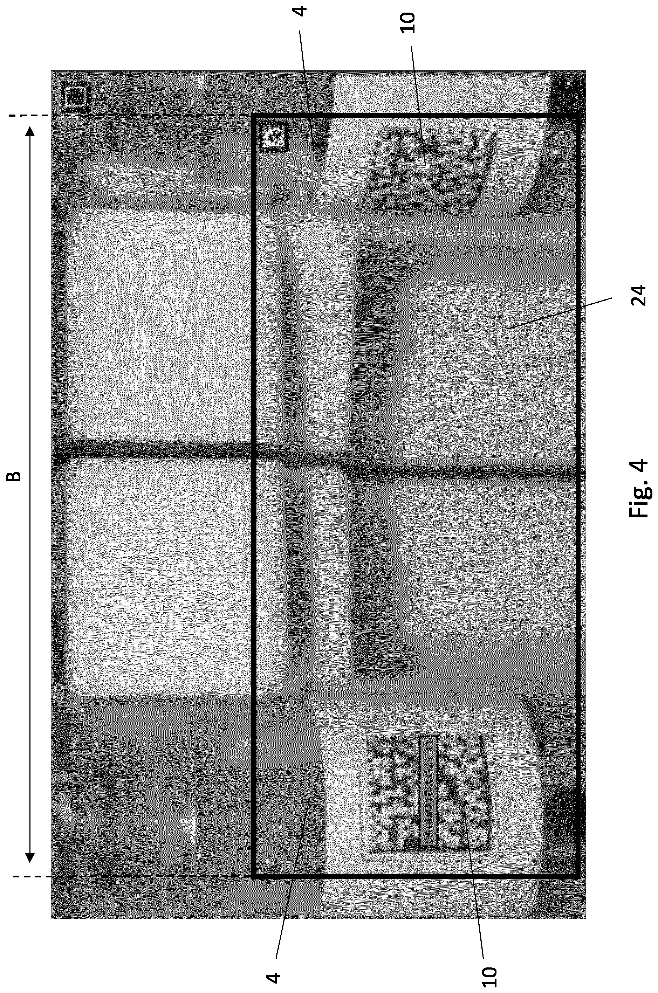

Wie aus der Aufnahme in Fig. 4 zu sehen ist, wurde im dargestellten Beispielsfall die Breite B des aktiven Sichtfelds 24 im Bereich der Produkte 4 so breit gewählt, dass bereits eine zweite Kennzeichnung 10 eines weiteren Produkts 4 am rechten Rand des aktiven Sichtfelds 24 erscheinen kann, während die erste Kennzeichnung 10 eines ersten Produkts 4 sich noch am linken Rand des aktiven Sichtfelds 24 befindet. Jedoch ist die im rechten Rand befindliche Kennzeichnung 10 aufgrund ihrer Drehlage relativ zur Kamera 18 von dieser gerade noch nicht auslesbar. Das dargestellte Szenario stellt also eine Grenzsituation der maximalen Breite B des aktiven Sichtfelds 24 dar, wenn die Kamera 18 lediglich eine Kennzeichnung 10 in einer Bildaufnahme erkennen soll.

In der Regel wird man aufgrund des gewünschten hohen Durchsatzes zwischen zwei und vier Kameras 18 benötigen.

## Patentansprüche

1. Verfahren zur Identifizierung und Nachverfolgung von vereinzelt geförderten Produkten (4), insbesondere von Medizinprodukten wie Spritzen, Ampullen, Vials oder Inhalatoren, wobei die vereinzelt geförderten Produkte (4) zumindest bereichsweise rotationssymmetrisch, insbesondere zylindrisch, ausgebildet sind und eine Mantelfläche (8) aufweisen, auf die jeweils eine Kennzeichnung (10) aufgebracht ist, mit folgenden Schritten:
Fördern der Produkte (4) mittels einer Transportvorrichtung (2) in einer Transportrichtung (T), wobei die Transportvorrichtung (2) eine Vielzahl von aufeinanderfolgenden Zellen (6) zur Aufnahme jeweils eines Produkts (4) aufweist, wobei jedes Produkt (4) in der zugehörigen Zelle (6) drehbar aufgenommen ist,
Drehen eines jeden Produkts (4) während des Förderns mittels eines Reibungselements (20), das beim Fördern der Produkte (4) mit jedem Produkt (4) durch Reibung in Eingriff gelangt,
**dadurch gekennzeichnet, dass** das Verfahren den Schritt aufweist:
Auslesen der auf die Mantelfläche (8) eines jeden Produkts (4) aufgebrachten Kennzeichnung (10) mittels eines stationären Kamerasystems (16) mit mindestens einer Kamera (18) während des Drehens des jeweiligen Produkts (4),
wobei das Kamerasystem (16) mehrere Kameras (18), zumindest aber eine erste und eine zweite Kamera (18) aufweist, die in Transportrichtung (T) aufeinanderfolgend angeordnet sind, und
wobei die Korrelation zwischen der Translationsgeschwindigkeit der Transportvorrichtung (2), einem Durchmesser (34) des rotationssymmetrischen Bereichs des Produkts (4), einem Abstand (D) der Zellen (6) der Transportvorrichtung (2), einer Breite (B) eines aktiven Sichtfelds (24) der Kameras (18) im Bereich der Produkte (4) und einem Abstand der Kameras (18) zueinander derart eingestellt wird, dass sich ein vom aktiven Sichtfeld (24) der zweiten Kamera (18) während der Drehung des Produkts (4) erfasster zweiter Umfangsabschnitt des Produkts (4) von einem vom aktiven Sichtfeld (24) der ersten Kamera (18) während der Drehung des Produkts (4) erfassten ersten Umfangsabschnitt des Produkts (4) unterscheidet.

2. Verfahren nach Anspruch 1, **dadurch gekennzeichnet, dass** das Reibungselement (20) stationär ist.

3. Verfahren nach Anspruch 2, **dadurch gekennzeichnet, dass** das Reibungselement (20) eine Leiste ist.

4. Verfahren nach einem der vorangehenden Ansprüche, **dadurch gekennzeichnet, dass** das Reibungselement (20) auf der den Produkten (4) zugewandten Seite ein Elastomer-Material aufweist.

5. Verfahren nach einem der vorangehenden Ansprüche, **dadurch gekennzeichnet, dass** jedes Produkt (4) in einer Aufnahme (7) der Zelle (6) gegen seine Schwerkraft abgestützt ist und das Drehen des Produkts (4) um eine Rotationsachse (22) des Produkts (4) erfolgt, die senkrecht zur Transportrichtung (T) ist.

6. Verfahren nach einem der vorangehenden Ansprüche, **dadurch gekennzeichnet, dass** jedes Produkt (4) in der Aufnahme (7) der Zelle (6) an Rollen (30) gelagert ist, deren Drehachse (31) parallel zur Rotationsachse (22) des Produkts (4) ist.

7. Verfahren nach einem der vorangehenden Ansprüche, **dadurch gekennzeichnet, dass** das Fördern mit gleichmäßiger Translationsgeschwindigkeit erfolgt und das Drehen mit gleichmäßiger Drehgeschwindigkeit erfolgt.

8. Verfahren nach einem der vorangehenden Ansprüche, **dadurch gekennzeichnet, dass** sich die aktiven Sichtfelder (24) der mehreren Kameras (18) im Bereich der Produkte (4) räumlich nicht überlagern.

9. Verfahren nach einem der vorangehenden Ansprüche, **dadurch gekennzeichnet, dass** sich der erste und der zweite Umfangsabschnitt mindestens um eine Erstreckung der Kennzeichnung (10) in Umfangsrichtung des rotationssymmetrischen Bereichs des Produkts (4) überlappen.

10. Verfahren nach einem der vorangehenden Ansprüche, **dadurch gekennzeichnet, dass** eine Breite (B) des aktiven Sichtfelds (24) der mindestens einen Kamera (18) im Bereich der Produkte (4) nicht größer als der Abstand (D) zwischen zwei Zellen (6) der Transportvorrichtung (2) ist.

11. Verfahren nach einem der vorangehenden Ansprüche, **dadurch gekennzeichnet, dass** eine Bildaufnahmefrequenz der mindestens einen Kamera (18) im Bereich von 20 bis 60 Bildern pro Sekunde liegt.

12. Verfahren nach einem der vorangehenden Ansprüche, **dadurch gekennzeichnet, dass** ein Zeitintervall der Bildaufnahme der mindestens einen Kamera (18) nicht länger als die Dauer ist, in der sich die Transportvorrichtung (2) um den Abstand (D) zwischen zwei Zellen (6) vorwärtsbewegt.

13. Verfahren nach einem der vorangehenden Ansprüche, **dadurch gekennzeichnet, dass** die Translationsgeschwindigkeit der Transportvorrichtung (2) mindestens 10 mm pro Sekunde beträgt.

## Claims

1. A method for identifying and tracking singly conveyed products (4), in particular medical products such as syringes, ampoules, vials or inhalers, wherein the singly conveyed products (4) are at least partially rotationally symmetrical and have a peripheral surface (8) to which a marking (10) is respectively applied, the method comprising the steps of:
conveying the products (4) by means of a transport device (2) in a direction of transport (T), wherein the transport device (2) has a plurality of successive cells (6), each of the cells (6) receiving one of the products (4), wherein each product (4) is rotatably received in the associated cell (6),
during conveying, rotating each product (4) by means of a friction element (20) which, as the products (4) are being conveyed, comes into engagement with each product (4) by friction,
**characterized in that**
the method comprises the step of reading the marking (10) applied to the peripheral surface (8) of each product (4) by a stationary camera system (16) with at least one camera (18) as the respective product (4) is being rotated,
wherein the camera system (16) comprises a plurality of cameras (18), but at least a first and a second camera, arranged in succession in the direction of transport (T), and
wherein the correlation between the translational speed of the transport device (2), a diameter (34) of the rotationally symmetrical region of each product (4), a distance (D) between the cells (6) of the transport device (2), a width (B) of an active field of view (24) of each camera (18) in a region of the products (4), and a distance between the cameras (18) is set in such a manner that a second circumferential portion of each product (4) sensed by a second active field of view of the second camera during the rotation of the product (4) differs from a first circumferential portion of each product (4) sensed by a first active field of view of the first camera during the rotation of the product (4).

2. The method according to claim 1, **characterized in that** the friction element (20) is stationary.

3. The method according to claim 2, **characterized in that** the friction element (20) is a strip.

4. The method according to any of the preceding claims, **characterized in that** the friction element (20) has an elastomer material on a side which faces toward the products (4).

5. The method according to any of the preceding claims, **characterized in that** each product (4) is supported against its gravity in a receptacle (7) of the cell (6), and rotating the product (4) is effected about an axis of rotation (22) of the product (4) that is perpendicular to the direction of transport (T).

6. The method according to any of the preceding claims, **characterized in that** each product (4) is mounted in the receptacle (7) of the associated cell (6) on rollers (30), wherein the axis of rotation (31) of each roller (30) is parallel to the axis of rotation (22) of the product (4).

7. The method according to any of the preceding claims, **characterized in that** conveying is effected at a uniform translational speed, and rotating is effected at a uniform rotational speed.

8. The method according to any of the preceding claims, **characterized in that** the active fields of view (24) of the plurality of cameras (18) do not spatially overlap in a region of the products (4).

9. The method according to any of the preceding claims, **characterized in that** the first and the second circumferential portion overlap at least by an extension of the marking (10) in the circumferential direction of the rotationally symmetrical region of the product (4).

10. The method according to any of the preceding claims, **characterized in that** a width (B) of the active field of view (24) of the at least one camera (18) in a region of the products (4) is not greater than the distance (D) between two cells (6) of the transport device (2).

11. The method according to any of the preceding claims, **characterized in that** an image recording frequency of the at least one camera (18) is in the range from 20 to 60 images per second.

12. The method according to any of the preceding claims, **characterized in that** a time interval of image recording by the at least one camera (18) is not longer than a period in which the transport device (2) advances by the distance (D) between two cells (6).

13. The method according to any of the preceding claims, **characterized in that** the translational speed of the transport device (2) is at least 10 mm per second.

## Revendications

1. Procédé, destiné à identifier et à suivre des produits (4) convoyés individuellement, notamment des produits médicaux, tels que des seringues, des ampoules, des fioles ou des inhalateurs, les produits (4) convoyés individuellement étant conçus au moins par endroits de manière symétrique en rotation, notamment sous forme cylindrique et comportant une surface enveloppante (8) sur laquelle est chaque fois apposée une identification (10), comportant les étapes suivantes, consistant à :
convoyer les produits (4) au moyen d'un dispositif de transport (2) dans une direction de transport (T), le dispositif de transport (2) comportant une pluralité de cellules (6) successives, destinées à recevoir chacune un produit (4), chaque produit (4) étant reçu de manière rotative dans la cellule (6) associée,
faire tourner chaque produit (4) pendant le convoyage au moyen d'un élément de friction (20), qui lors du convoyage des produits (4) arrive en engagement par friction avec chaque produit (4),
**caractérisé en ce que** le procédé comporte l'étape consistant à :
lire l'identification (10) apposée sur la surface enveloppante (8) de chaque produit (4) au moyen d'un système de caméras (16) stationnaire, pourvu d'au moins une caméra (18) pendant la rotation du produit (4) concerné,
le système de caméras (16) comportant plusieurs caméras (18), mais au moins une première et une deuxième caméras (18) qui sont placées successivement dans la direction de transport (T) et
la corrélation entre la vitesse de translation du dispositif de transport (2), un diamètre (34) de la zone symétrique en rotation du produit (4), un écart (D) entre les cellules (6) du dispositif de transport (2), une largeur (B) d'un champ visuel (24) actif des caméras (18) dans la zone des produits (4) et un écart mutuel entre les caméras (18) étant réglée de telle sorte qu'une deuxième partie circonférentielle du produit (4), détectée par le champ visuel (24) actif de la deuxième caméra (18) pendant la rotation du produit (4) se différencie d'une première partie circonférentielle du produit (4), détectée par le champ visuel (24) actif de la première caméra (18) pendant la rotation du produit (4).

2. Procédé selon la revendication 1, **caractérisé en ce que** l'élément de friction (20) est stationnaire.

3. Procédé selon la revendication 2, **caractérisé en ce que** l'élément de friction (20) est une baguette.

4. Procédé selon l'une quelconque des revendications précédentes, **caractérisé en ce que** sur la face qui est dirigée vers les produits (4), l'élément de friction (20) comporte une matière élastomère.

5. Procédé selon l'une quelconque des revendications précédentes, **caractérisé en ce que** dans un logement (7) de la cellule (6), chaque produit (4) est soutenu contre sa gravité et **en ce que** la rotation du produit (4) s'effectue autour d'un axe de rotation (22) du produit (4) qui est perpendiculaire à la direction de transport (T).

6. Procédé selon l'une quelconque des revendications précédentes, **caractérisé en ce que** dans le logement (7) de la cellule (6), chaque produit (4) est logé sur des galets (30), dont l'axe de pivotement (31) est parallèle à l'axe de rotation (22) du produit (4).

7. Procédé selon l'une quelconque des revendications précédentes, **caractérisé en ce que** le convoyage s'effectue à une vitesse de translation régulière et la rotation s'effectue à une vitesse de rotation régulière.

8. Procédé selon l'une quelconque des revendications précédentes, **caractérisé en ce que** les champs visuels (24) actifs des plusieurs caméras (18) ne se superposent pas dans l'espace, dans la zone des produits (4).

9. Procédé selon l'une quelconque des revendications précédentes, **caractérisé en ce que** la première et la deuxième parties circonférentielles se chevauchent au moins de la valeur d'une extension de l'identification (10) dans la direction circonférentielle de la zone symétrique en rotation du produit (4).

10. Procédé selon l'une quelconque des revendications précédentes, **caractérisé en ce que** dans la zone des produits (4), une largeur (B) du champ visuel (24) actif de l'au moins une caméra (18) n'est pas supérieure à l'écart (D) entre deux cellules (6) du dispositif de transport (2).

11. Procédé selon l'une quelconque des revendications précédentes, **caractérisé en ce qu'**une fréquence de prise de vue de l'au moins une caméra (18) se situe dans l'ordre de 20 à 60 images par seconde.

12. Procédé selon l'une quelconque des revendications précédentes, **caractérisé en ce qu'**un intervalle temporel de la prise de vue de l'au moins une caméra (18) n'est pas supérieur à la durée pendant laquelle le dispositif de transport (2) se déplace vers l'avant de la valeur de l'écart (D) entre deux cellules (6).

13. Procédé selon l'une quelconque des revendications précédentes, **caractérisé en ce que** la vitesse de translation du dispositif de transport (2) est d'au moins 10 mm par seconde.
